(19) Europäisches Patentamt
European Patent Office
Office européen des brevets

(11) **EP 3 447 731 A1**

(12) **EUROPEAN PATENT APPLICATION**

(43) Date of publication:
**27.02.2019 Bulletin 2019/09**

(51) Int Cl.:
***G06T 11/00*** *(2006.01)*

(21) Application number: **17187761.6**

(22) Date of filing: **24.08.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **AGFA NV
2640 Mortsel (BE)**

(72) Inventors:
• **SOONS, Joris**
2640 Mortsel (BE)
• **DANUDIBROTO, Adriyana**
2640 Mortsel (BE)
• **CANT, Jeroen**
2640 Mortsel (BE)

(74) Representative: **Verbrugghe, Anne Marie L.
Agfa HealthCare
IP Department 3802
Septestraat 27
2640 Mortsel (BE)**

(54) **A METHOD OF GENERATING AN ENHANCED TOMOGRAPHIC IMAGE OF AN OBJECT**

(57) A neural network is trained by feeding it with a first set of projection images of said object and a second set of projection images of said object at lower quality than the quality of said first set for at least one image quality aspect.

At inference phase, a set of acquired low quality projection images is transformed by the trained neural network. The output is subsequently used in a reconstruction algorithm to generate an enhanced tomographic image of the object.

FIG. 4

**Description**

FIELD OF THE INVENTION

The present invention is in the field of digital radiography and more in particular relates to a method to enhance image quality and reduce artefacts, more particularly in computed tomography (CT), cone beam computed tomography (CBCT) or tomosynthesis imaging systems.

BACKGROUND OF THE INVENTION

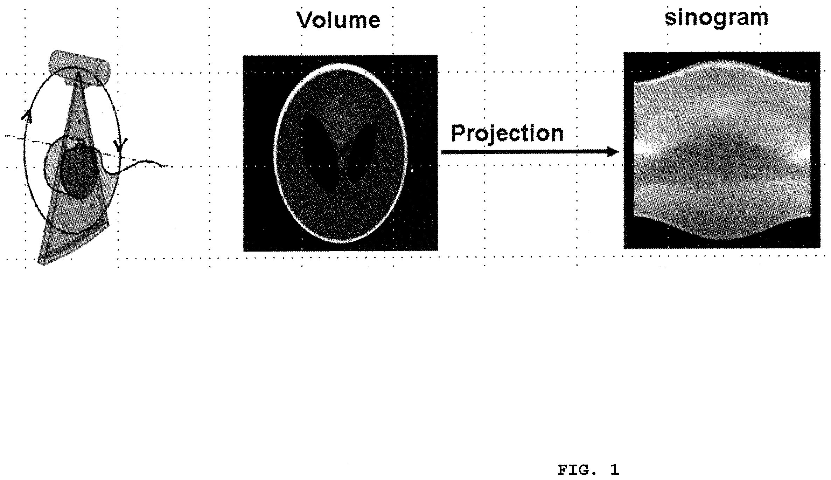

In Computed Tomography (CT) an X-ray source and a linear detector rotate around a patient or an object to acquire a sinogram being the 2-D array of data containing projections, as is shown in Fig 1. This sinogram is then used in a reconstruction step (e.g. applying the Filtered Back Projection method, known in the art) to obtain images representing virtual slices through a patient or through an object.

Cone beam Computed Tomography (CBCT) is another imaging technique in which a cone shaped beam of penetrating radiation (x-rays) is directed towards an object or a patient.

A two-dimensional radiation detector such as a flat panel detector is used to detect the x-rays that are modulated by the object or patient.

The x-ray source and the detector rotate relative to the patient or object to be imaged.

A cone-shaped beam is directed through an area of interest on the patient or the object onto an area on the detector on the opposite side of the x-ray source.

During the rotation multiple sequential planar images of the field of view are acquired in a complete or sometimes partial arc.

Acquired images are called projection images. These acquired images are similar to regular low dose x-ray images.

A 3D image is reconstructed by means of the projection images recorded at the different angles by applying a reconstruction algorithm (e.g. Feldkamp-Davis-Kress reconstruction).

Another application which uses a flat panel detector is tomosynthesis. In this method the x-ray source also rotates around the object or patient but the rotation angle is limited (e.g. rotation of 30 degrees).

Last decade, much research has been focused on advanced iterative reconstruction schemes which take prior knowledge into account. Iterative reconstruction algorithms have shown to reduce the dose up to 70% for some high contrast imaging tasks.

A classic iterative reconstruction approach solves the equation:

$$Arg \min_x \frac{1}{2} \| Ax - y \|_W^2 + \beta R(x) \qquad \qquad \mathtt{(eq1)}$$

in which x is the volume to be reconstructed, y the projection images or sinograms, A the forward projection, W defining the $L^w$-norm used, and R(x) a regularizer function which gives a certain penalty (e.g. penalty for non-smoothness) with a parameter $\beta$.

Usually, in this approach the first term, or the data term, is a fitting model of the observed projection data, while the second term, or the regularization term, often incorporates prior knowledge such as noise-characteristics, assumptions on sparsity, etc. The first term is minimized if the reconstructed volume x is consistent with the projection image y. The second term enforces a certain condition on the reconstructed volume: e.g. a total variation (TV) minimization as R(x) will give an edge preserving non-smoothness penalty, enforcing a piecewise constant condition.

Choosing a certain condition can have a profound impact on the solution and tuning the parameter $\beta$ could be cumbersome. Moreover, the iterative reconstruction stops after a predefined amount of iteration steps or when a stopping criteria is met. In a practical algebraic reconstruction implementation, the iterative reconstruction (e.g. Simultaneous iterative reconstruction technique) is alternated with TVmin iterations. However, regularizers are often cumbersome to tune. Mistuning could lead to no effect of regularization or, even more severely, to the deletion of real image content such as structures.

Nowadays, flat panel detectors used in the above described imaging techniques are capable of acquiring high resolution images, with pixel sizes of 150 $\mu m$ or smaller. However, the read-out speed of panels is proportional to the resolution of the images. Therefore, in applications that demand a high acquisition speed, a tradeoff has to be made between pixel resolution and readout speed.

This is conventionally performed by binning pixels (e.g. in a 2x2 binned mode, a 4 times higher frame rate can be achieved at the cost of a pixel size that is doubled).

Also in CBCT a trade-off has to be made between acquisition speed and resolution.
A higher acquisition speed results in a shorter total scan time, which reduces the risk of motion by the object or patient being imaged, but only at the expense of the resolution of the acquired 2D images.

To compensate for the loss of resolution, the acquired images can be up-sampled.

One way to perform this up-sampling is to apply a linear method, i.e. interpolation, to the image. However, interpolation methods such as nearest-neighbor, bilinear or bicubic often result in artifacts such as stair-casing, blur and ringing.

In some cases, it is possible to use non-linear methods to restore true resolution content beyond the band limit of the imaging system. This is called super-resolution. However, the forward or direct problem (downsampling) is well-posed, while the inverse problem (upsampling, overcoming the fundamental resolution limits) is in general ill-posed.

In order to overcome this instability, regularization methods are needed to get a good solution. These regularization methods use prior information or signal redundancy to compensate the loss of information.

For medical imaging we could leverage prior knowledge about the anatomy or imaging setup to improve image quality of the super resolution image. However, unlike photographic imaging, the goal of medical imaging is to facilitate diagnosis, rather than to produce visually pleasing images. Consequently, image processing artifacts are much less tolerable in medical images than in photographic applications which limit their breakthrough today.
For super-resolution, we need to estimate the missing high frequency content (edges) beyond the Nyquist frequency.

Different algorithms exist to obtain super-resolution.

In edge-directed algorithms (e.g. NEDI, DDCI) the aim is to preserve the edge by using statistical information. Another way is to restore images by using information from multiple frames. As a result, redundant information is captured and by sub-pixel image alignment and fusion, a higher spatial or temporal resolution restoration can be achieved. Tools such as ML, MAP and POCS can be applied. Such techniques are used for video processing and could easily be adapted to dynamic imaging of patients with X-rays.

Another class of algorithms are example-based methods. They exploit the internal similarities of images of the same kind of image or learn the mapping function from low to high resolution based on existing example pair.

The advent of the use of deep network such as a Convolutional Neural Network (CNN) for Super resolution (SR) was started by the work of Dong, Chao et al. "Learning a deep convolutional network for image super-resolution" - European Conference on Computer Vision. Springer, Cham, 2014 which eventually became a benchmark for other SR with deep learning.

The use of deep learning networks has shown superior performance in comparison to up-sampling by interpolation or other non-deep learning-based methods in terms of visual quality or signal to noise ratio measurement. CNN is a method that maps output to input through a series of filtering layers. Layers could be convolutional, pooling or fully connected layers, combined with a non-linear activation function such as RELU (rectified linear unit). A deeper network, and thus deep learning, are achieved by adding more layers.

CNN also have shown the potential to perform super-resolution in video sequences. In videos, most of a scene information is shared by neighboring video frames. The similarity between frames provides the data redundancy that can be exploited to obtain super-resolution

In contrast, the scene is not shared by neighboring projections in computed tomography. Nevertheless, data redundancy can be obtained by getting information from shapes that are viewed from a range of known directions. In combination with the 3D reconstruction, this approach may steer the solution to higher resolution.

It is an object of the present invention to provide a method for generating high quality tomographic images of an object or a patient, part of a patient or animal, by applying a combination of reconstruction and a trained neural network.

SUMMARY OF THE INVENTION

The present invention provides a method according to claim 1.

Specific features for preferred embodiments of the invention are set out in the dependent claims.

Further advantages and embodiments of the present invention will become apparent from the following description and drawings.

According to the present invention a tomographic image of an object or a patient is obtained starting from low quality projection data and using a neural network to enhance that quality aspect, the neural network being trained with a first set of high quality projection data and a second set of low quality projection data.

In the context of the present invention, image quality comprises noise content, resolution, presence of artefacts etc. Image quality can be affected by the use of low dose at image irradiation, the use of monochromatic / polychromatic irradiation, scattering, the presence of an unwanted (disturbing) object in the image etc.
Examples will be described in detail further on.

High quality refers to the quality of a certain aspect in an image that a user expects to obtain after processing.

Low quality refers to the quality of a certain aspect that the user can obtain when acquiring the image.

For example when the aspect is resolution, a high quality image will have a higher resolution than the resolution that can be obtained by the image acquisition system that is used. A well trained CNN can learn prior information or retrieve redundant information on images, allowing us to obtain, for example, high frequency information beyond the Nyquist frequency.

BRIEF DESCRIPTION OF THE DRAWINGS

Fig. 1 illustrates CBCT image acquisition,
Fig. 2 shows the outline of the network used in training,
Fig. 3 shows a specific embodiment consisting of 3 CNN's,
Fig. 4 schematically shows the training on projection images,
Fig. 5 illustrates the reconstruction.

DETAILED DESCRIPTION OF THE INVENTION

Figure 1 illustrates a cone beam image acquisition system for generating a set of 2D images that are used in a reconstruction algorithm to generate a 3D image representation of an object.

An x-rays source directs a cone of radiation towards an object (e.g. a patient). A series of two dimensional images is generated by emitting a cone of radiation at different angles. For example 400 images are generated over a range of 360 degrees.

The radiation transmitted through the object is detected by means of a 2 dimensional direct radiography detector that moves along with the cone beam (the invention is explained with regard to cone beam tomography but is likewise applicable to CT and tomosynthesis).

A trained neural network is then used to improve image quality of a series of 2D images. The output is then applied to a reconstruction algorithm running on a computer, such as Simultaneous iterative reconstruction technique (SIRT), to generate a 3D image representation of the object. Such reconstruction algorithms are well-known in the art.

The reconstructed image can then be stored in a memory or can be connected to a display device for display and examination or can be sent to a printer to generate a hard copy image or to a digital signal processor to be subjected to further processing etc.

Methodology

Supervised learning of the neural network

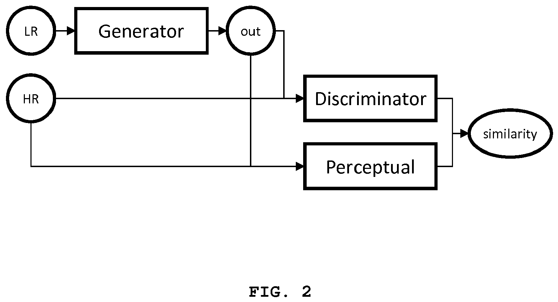

Figure 2 illustrates the training of a neural network (CNN) in accordance with the present invention.

A typical CNN has a training and inference stage.

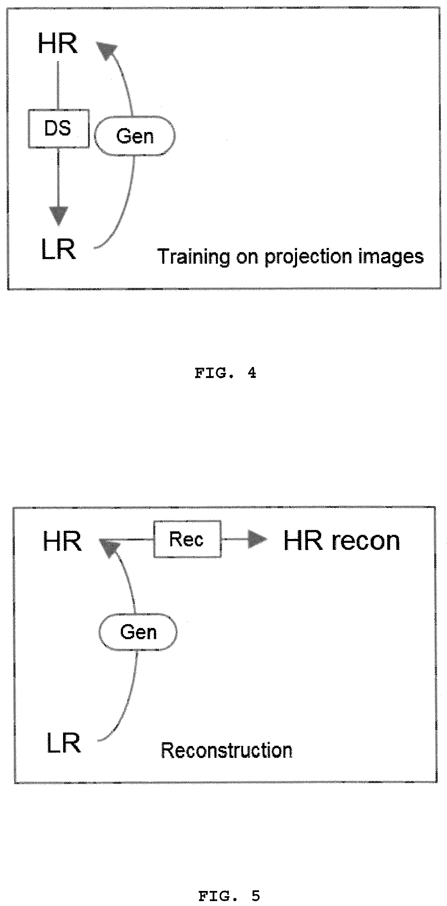

During training, as illustrated in fig. 4, the network learns to enhance the low quality image from a set of examples consisting of the high quality and the corresponding low quality images or image patches. The CNN learns by adjusting the weights of the convolution kernel with the aim to optimize the performance metric.

During inference (and testing), low quality images are transformed using the trained network. Several techniques exists to obtain faster and better learning: residual learning, the use of various performance metrics (MSE, SSIM, perceptual), batch normalizing, data augmentation, ...

Calculation time can be improved by using multithreading. In this case by using Python and Theano legacy library for deep learning and running the training on GTX Titan X card.

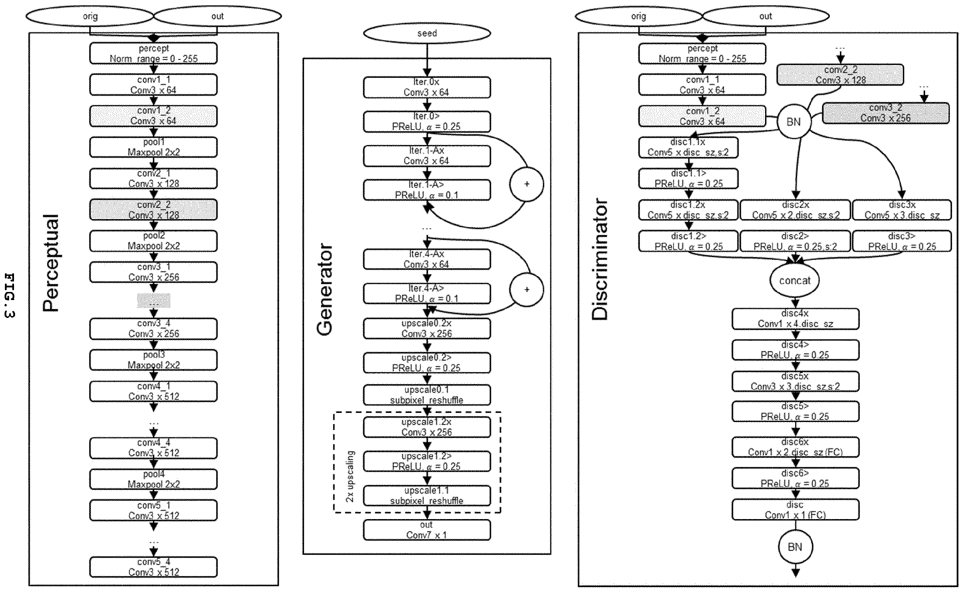

Fig. 3 shows the detailed configuration of each of the network components.

The following abbreviations are used: Conv: convolutional layer, PReLU: Parameterized Rectifier Linear Unit, Maxpool: Maximum pooling, BN: Batch Normalization, concat: concatenation, s: stride, ...

Experiments were performed using various network configurations:

- Auto-encoder (encoder-decoder) is a neural network used for unsupervised learning. It learns a (sparse) representation (encoding) for a set of data and has applications in noise reduction. A similar architecture is the U-Net.

- Generative adversarial network:

   ◦ In a specific embodiment of the present invention as illustrated in fig. 3, three CNNs are used that each have a designated role, namely: Generator (Gen), Discriminator (Disc) and Perceptual).

∘ The Gen network plays the role of generating an output (out) that mimics the high quality image version of the low quality image input, while the Disc and Perceptual networks take the role of assessing the quality of the generated image and provide it as a feedback for the Gen network in order to improve the generated image quality.

∘ The use of Gen and Disc network is based on the Generative Adversarial Network (GAN) [Goodfellow, Ian, Jean Pouget-Abadie, Mehdi Mirza, Bing Xu, David Warde-Farley, Sherjil Ozair, Aaron Courville and Yoshua Bengio. "Generative adversarial nets." In Advances in neural information processing systems, pp. 2672-2680, 2014.], that utilizes the concept of two networks competing to outperform each other, i.e. the Gen generating a convincingly high resolution (HR) realistic image and the Disc distinguishing between actual HR images and images generated by the Gen.

∘ The Perceptual network is based on the work of [Johnson, Justin, Alexandre Alahi, and Li Fei-Fei. "Perceptual losses for real-time style transfer and super-resolution"arXiv preprint arXiv:1603.08155(2016)] which aimes to provide an assessment metric for the evaluation of the generated image quality that is more aligned to the human visual perception than just taking the differences in pixel brightness (e.g. MSE). The current network layout design is based on the work of [Alexjc on https://github.com/alexjc/neural-enhance] for super-resolution of photo images.

- Training:

∘ retraining: network weights are initialized to the weights from a trained network (E.g. on super resolution of photographic images).
∘ No retraining: weights of network are initialized randomly

- Input - output

∘ One low quality image input - one high quality image output Multiple low quality image input containing current image of interest and corresponding previous and next images in the sequence, e.g. projection images from neighboring acquisition angles or neighboring image slices, and one high quality output. This approach takes advantage of the redundant information in different images.

- Residual approach with a bypass connection from input to output demands the network to reconstruct only the difference between the low quality and the high quality image without having to learn to reconstruct the LQ image itself.

- Scales:

∘ Single scale input and output
∘ Dual-scale input with a bypass connection for the low-passed input to output. The low-passed component (e.g. by Gaussian filtering) of the low quality and high quality image should be the same, thus this approach requires the network to learn to generate only the high frequency component of the HR.

- Different performance metric: Perceptual, MSE, MAD

The network can be set using any combinations of the aforementioned configuration (e.g. a network that takes in three low quality image input and uses residual and dual-scale connection).
Since the training of the network uses image patches (i.e. small subregions of the entire image, which contain only a small part of the imaged object or body part), it is expected that the learned network can be applied generically to X-ray images of various body parts. The reason behind this hypothesis is that the content of the image patches from one X-ray image would have similar or the same nature as other X-ray images even when the acquired object is different. It aligns with the idea of transfer learning which is often applied to photo images using well-trained large network such as AlexNet or GoogleNet for varying task only by re-training the final layer. Since in this case, the task is the same (e.g. super resolution) and only the object in the image is different, the same network should be directly if not with little re-training applicable. To further improve the generality of the trained network, the training data can be diversified with image pairs of varying degradation. In that way, the trained network is expected to be able to increase image quality for different grades of degradation.

Prior correction and enhanced reconstruction (Fig. 5)

In the proposed prior correction and enhanced reconstruction, a neural network is first applied on low quality (LQ) projection images to obtain high quality projection images. Subsequently, a reconstruction algorithm (e.g. FDK, SIRT) is applied to the high quality projection images to obtain enhanced tomographic images.
The use of a neural network to produce high quality projection images poses a risk of introducing errors, e.g. introducing image content or artifacts that are do not correspond to the imaged object or patient. However, since the neural network enhanced projection images are not inspected directly but only used as input for a reconstruction, local errors in a specific projection image are expected to be averaged out by the reconstruction process afterwards. E.g., if the neural network enhancement introduces small errors at one location in one projection image, these errors will not be seen in the complete reconstruction (which is based on, e.g., 400 projection images).

To train the neural network, training data consisting of examples of both high quality (HQ) and corresponding degraded low quality (LQ) projection images or sinograms are needed.

LQ images can be simulated by degrading existing HQ images (e.g. lower the resolution).
Another approach is to acquire LQ projection images by using a modified acquisition protocol (e.g. removing anti-scatter grid).
A third approach would be to simulate HQ and LQ acquisitions. An advantage of using such a model approach in the well-posed forward problem, forward projection in this case, is that adding more realistic physics (e.g. scatter) to the model is straightforward. The neural network will be trained to do the (ill-posed) inverse problem (e.g. reducing scatter) in the projection image and reduce artifacts in the final reconstructed tomographic image.

Below some examples of training data and the achieved enhancements are described.

1. LQ projection images can be acquired by using available HQ projection images and down sample them (DS) to LQ projection images by using binning, low pass filtering, or others.
Another way is to acquire both HQ and LQ images from the same object by using a different detector resolution. This can be done on a real object or with a computer model.
After training the neural network on HQ and LQ, the combination of the trained neural network and the reconstruction will result in an increased resolution of the tomographic image compared to directly reconstructing the LQ projection data.

2. In another embodiment of the present invention not only one LQ projection image is taken into account but also other LQ projection images acquired from different (e.g. neighboring) viewing directions are taken into account to generate one HQ projection image. This can be performed in the training phase as well as in the inference phase. For example in a set of LQ projection images P, a projection image at view i, $P_i$, could be up-sampled to a HQ image using the information in $P_i$ and also the neighboring projections $P_{i-1}$, $P_{i+1}$, $P_{i-2}$,...
This way, information from multiple viewpoints is used to enhance a single projection image. As such, data redundancy can be obtained by getting information from an object from different known viewing directions.

3. Use a HQ training data set with more viewing directions than the LQ data set. The LQ dataset can be obtained by removing some viewing directions in HQ data, or by acquiring a set of projection images with fewer projections of the same object.
During inference, virtual projection images are generated in between viewing directions and the angular sampling rate can be increased.
Similar, in a limited angle acquisition, viewing directions outside the original angular range can be achieved.

4. A network is trained by using normal dose data as HQ and low dose data as LQ.
The low dose data is acquired by adding noise to the HQ projection images.
Another way is to acquire both HQ and LQ images from the same object by using different dose setting. This can be done on a real object or with a computer model. The trained network is used to convert low dose data into "virtual" normal dose data and subsequently used in a reconstruction step to obtain an enhanced reconstructed image.

5. HQ and LQ projection images are acquired from the same object, in which the HQ has reduced/no scattering compared to the LQ projection images. This can be achieved by using an anti-scatter grid.
Another way is to use a computer model approach and generate LQ images by simulating scatter (e.g. Monte-Carlo simulations, scatter kernels) and HQ by not including scatter (e.g. ray tracing).
After training the neural network on HQ and LQ, the combination of the trained neural network and the reconstruction will result in a reduction of scatter artefacts in the tomographic image.

6. HQ and LQ projection images are acquired from the same object. HQ is acquired with monochromatic X-rays and LQ is acquired with a different X-ray spectrum, e.g. polychromatic X-rays. This can be achieved by using computer model in which the polychromatic transmission through materials are included and excluded, or by two acquisitions using different X-ray sources or filtering. After training the neural network on HQ and LQ, the combination of the trained neural network and the reconstruction will result in a reduction of beam hardening artifacts in the tomographic image.

7. HQ projection images are acquired from a certain object, LQ projection images are acquired from the same object but with some artifact inducing material (e.g. metal). After training the neural network on HQ and LQ, the combination of the trained neural network and the reconstruction will result in a reduction of artifacts introduced by the artifact inducing material.

8. One can infer the abovementioned trained networks sequentially. One can also train the network on a combination of the abovementioned degradations.

9. Similar approaches could be applied for sinograms. In contrast, the x-axis in a sinogram represents the different viewing directions. In order to obtain more information neighboring sinograms could be taken into account.
All above mentioned HQ and LQ datasets can be obtained by experiments, or be generated using computer simulations in which the image quality degrading effects are modelled.

**Claims**

1. A method of generating a tomographic image of an object comprising:

   - acquiring for said object a set of digital projection image data having low image quality for at least one image quality aspect,
   - generating a set of digital projection image data having an image quality for said aspect that is higher than that of the low quality digital projection image data with a trained neural network, wherein said neural network is trained in advance with a first set of projection image data with high quality for said aspect and a second set of projection image data with a lower quality than said high quality for said aspect,
   - reconstructing an enhanced tomographic image by means of the generated set of high quality digital projection image data.

2. A method according to claim 1, wherein the second set of low quality projection image data is computed from the said first set of high quality projection images

3. A method according to claim 2 wherein said second set of low quality projection image data is obtained by subsampling projection image data of said first set of high quality image projection data.

4. A method according to claim 1 wherein said second low quality projection image data is acquired from the same object as the said first set of high quality projection image data, using an acquisition technique that results in a lower image quality for said quality aspect, said acquisition technique being object irradiation or modelling object irradiation.

5. A method according to any of the preceding claims wherein low quality projection image data acquired from at least one different viewing angle than the angle of the generated high quality projection image data, are taken into account.

6. A method according to claim 1 wherein projection image data of said second set of low quality projection image data are obtained by adding noise to the projection image data of said first set or by modelling the addition of noise.

7. A method according to claim 1 wherein projection data of said second set of low quality projection image data are acquired by using larger detector pixel size than for the first set of projection image data or modelling the use of larger detector pixel size.

8. A method according to claim 1 wherein projection image data of said second set of low quality projection image data are obtained by irradiating at lower dose than the first set of projection image data or by modelling the use of a lower dose.

9. A method according to claim 1 wherein projection image data of said second set of low quality projection image data are obtained by irradiating with a different X-ray spectrum in addition to the first set of projections or by modelling the additional irradiation.

10. A method according to claim 1 wherein projection image data of said second set of low quality projection image data are obtained by taking into account scattering.

11. A method according to claim 1 wherein projection image data of said second set of low quality projection image data are obtained by adding artefact inducing materials to the object or modelling such addition.

12. A method according to claim 1 wherein projection image data of said second set of low quality projection image data is a subset of the first set of projection image data.

13. A method according to any of the preceding claims wherein said object is a human being, an animal or part thereof.

14. A method according to any of the preceding claims wherein said object is a computer-modelled object.

Volume          sinogram

Projection →

FIG. 1

FIG. 2

FIG.3

FIG. 4

FIG. 5

Europäisches
Patentamt

European
Patent Office

Office européen
des brevets

# EUROPEAN SEARCH REPORT

Application Number

EP 17 18 7761

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/051519 A1 (YANG DONG [US] ET AL) 28 February 2013 (2013-02-28) * abstract * * paragraph [0013] * * paragraph [0015] * ----- | 1-14 | INV. G06T11/00 |
| X | US 2013/051516 A1 (YANG DONG [US] ET AL) 28 February 2013 (2013-02-28) * abstract * * paragraph [0040] * * paragraph [0048] - paragraph [0050] * ----- | 1 | |
| X | Justin Johnson ET AL: "Perceptual Losses for Real-Time Style Transfer and Super-Resolution" In: "ECCV 2016 conference", 1 January 2016 (2016-01-01), Springer International Publishing, Cham 032548, XP055431982, ISSN: 0302-9743 ISBN: 978-3-642-33485-6 vol. 9906, pages 694-711, DOI: 10.1007/978-3-319-46475-6_43, * abstract * * Section: Image super-resolution * * Section: Training details * ----- | 1 | |
| E | WO 2017/223560 A1 (RENSSELAER POLYTECH INST [US]) 28 December 2017 (2017-12-28) * abstract * * figure 11 * ----- | 1 | |

TECHNICAL FIELDS SEARCHED (IPC)

G06T

The present search report has been drawn up for all claims

| Place of search | Date of completion of the search | Examiner |
|---|---|---|
| Munich | 20 February 2018 | Leclercq, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 447 731 A1**

## ANNEX TO THE EUROPEAN SEARCH REPORT
## ON EUROPEAN PATENT APPLICATION NO.

EP 17 18 7761

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2018

| Patent document cited in search report | | Publication date | Patent family member(s) | Publication date |
|---|---|---|---|---|
| US 2013051519 | A1 | 28-02-2013 | NONE | |
| US 2013051516 | A1 | 28-02-2013 | NONE | |
| WO 2017223560 | A1 | 28-12-2017 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Learning a deep convolutional network for image super-resolution. **DONG ; CHAO et al.** European Conference on Computer Vision. Springer, 2014
- **GOODFELLOW, IAN ; JEAN POUGET-ABADIE ; MEHDI MIRZA ; BING XU ; DAVID WARDE-FARLEY ; SHERJIL OZAIR ; AARON COURVILLE ; YOSHUA BENGIO.** Generative adversarial nets. *In Advances in neural information processing systems,* 2014, 2672-2680

- **JOHNSON ; JUSTIN ; ALEXANDRE ALAHI ; LI FEI-FEI.** Perceptual losses for real-time style transfer and super-resolution. *arXiv preprint arXiv:1603.08155,* 2016